# EUROPÄISCHE PATENTSCHRIFT

(11) **EP 2 694 215 B1**
(45) Veröffentlichungstag und Bekanntmachung des Hinweises auf die Patenterteilung: **24.09.2014**
(21) Anmeldenummer: 12786811.5
(22) Anmeldetag: 17.10.2012
(51) Int. Cl.: B02C 15/00, B02C 23/02, B02C 23/10, B02C 23/22, B02C 23/30

(54) **VERFAHREN UND VORRICHTUNG ZUR VERMAHLUNG VON FEUCHTEM MATERIAL**
METHOD AND DEVICE FOR GRINDING MOIST MATERIAL
PROCÉDÉ ET DISPOSITIF DESTINÉS À BROYER DES MATIÈRES HUMIDES

(43) Veröffentlichungstag der Anmeldung: 12.02.2014
(73) Patentinhaber: Loesche GmbH, 40549 Düsseldorf (DE)
(72) Erfinder: ZYSK, Karl-Heinrich, 44789 Bochum (DE); LETSCH, Thomas, 47179 Duisburg (DE); MEIRING, Hugo, 40699 Erkrath (DE); PURANIK, Rajendra, Mehrauli New Delhi 110030 (IN)
(74) Vertreter: Heim, Florian Andreas
(86) Internationale Anmeldenummer: PCT/EP2012/004342
(87) Internationale Veröffentlichungsnummer: WO 2013/143565

(56) Entgegenhaltungen:
- EP-A1- 0 164 512
- EP-A1- 0 979 675
- DE-A1- 2 232 611
- DE-A1-102009 051 226
- DE-B- 1 105 802

## Beschreibung

Die Erfindung betrifft ein Verfahren zur Vermahlung von feuchtem Material gemäß dem Oberbegriff des Anspruchs 1 und eine Vorrichtung zur Vermahlung von feuchtem Material gemäß dem Oberbegriff des Anspruchs 8.

Die Erfindung ist insbesondere für die Zementindustrie und die Vermahlung von feuchtem Zementrohmaterial geeignet, welches im Wesentlichen ein Gemisch aus Kalk- und Tongesteinen mit unterschiedlichen Wassergehalten ist.

Zementrohmaterial oder auch andere feuchte Mahlgüter, wie Kohlen, können bekanntermaßen besonders vorteilhaft in vertikalen Wälzmühlen, beispielsweise in einer Luftstrom-Wälzmühle des LOESCHE-Typs, einer Mahltrocknung unterworfen werden. Die Erfindung ist außerdem für die Vermahlung des in einem Brennprozess gebildeten Zementklinkers vorgesehen. Beim Klinker-Mahlprozess, welcher besonders energieeffizient und mit hohem Durchsatz in einer modifizierten LOESCHE-Luftstrom-Wälzmühle mit Mahl- und Präparationswalzen durchgeführt werden kann, werden zusammen mit dem heißen, trockenen Klinker weitere Zusatzmaterialien, wie Hüttensand beziehungsweise granulierte Hüttenschlacke, Gips, beispielsweise in Form von Industrieabfall-Gips, Kalkstein, Puzzolane und Flugasche vermahlen, um unterschiedliche Bindemittelqualitäten herzustellen.

Mahlverfahren für feuchtes Zementrohmaterial und die Vermahlung von Zementklinker mit Zusatzstoffen beziehungsweise Substitutsstoffen sowie Anlagen zur Durchführung der Verfahren mit vertikalen Wälzmühlen, insbesondere Luftstrom-Wälzmühlen, bei welchen für eine Mahltrocknung ein Heißgasstrom über eine Gasaustrittsöffnung zwischen einer rotierenden Mahlschüssel und einem Mühlengehäuse in einen Mahlraum gelangt und zerkleinertes Mahlgut in einem Mahlgut-Gas-Strom einem Sichter zugeführt wird, sowie mit einem Rejectkreislauf, sind aus den Prospekten der LOESCHE GmbH "LOESCHE-Mühlen für Zementrohmaterial" von 03/2009 und "LOESCHE-Mühlen für Zement und Hüttensand" von 01/2008 bekannt.

Bei einem Verfahren zur Vermahlung von heißem und feuchtem Material, insbesondere von Zement, Klinker, Schlacke und Zuschlagsstoffen, welches in DE 10 2005 040 519 B4 beschrieben ist, wird eine hohe Mahl-/Trocknungseffizienz dadurch erreicht, dass die Gaseintrittstemperatur des Heißgases neben der Rohmehltemperatur maßgeblich von der Feuchte des Rohmaterials mit der höchsten Feuchte bestimmt wird und zur Regelung einer vorgegebenen Sichteraustrittstemperatur des Gas-Produktgemisches ein Kühlgas oberhalb der ringförmigen Gasaustrittsöffnung und getrennt vom Heißgas sowie vor dem Sichter in die Vertikalmühle eingeleitet und dem Mahlgut-Gas-Gemisch zugemischt wird.

Bei der Vermahlung von wasserempfindlichen Mahlgütern und Mischungen, welche wasserempfindliche Mahlgüter enthalten, kann es im Mühlenraum durch Temperatur-, Volumen-, Druck- und Wasserdampfsättigungsbedingungen zu Reaktionen des Mahlgutes und/oder der Mischungsbestandteile untereinander in chemischer, physikalischer und/oder mineralogischer Sicht kommen, welche zu einer Beeinträchtigung des Mahlproduktes und der angestrebten Zementqualität führen können.

Der Erfindung liegt die Aufgabe zugrunde, ein Verfahren und eine Vorrichtung zur Vermahlung von feuchtem Material, insbesondere von feuchten Rohstoffen und Mischungen mit feuchten Materialien für die Zementherstellung, zu schaffen, welche unter weitgehender Vermeidung von nachteiligen Reaktionen der feuchten Mischungsbestandteile beziehungsweise der feuchten und trockenen Materialien zu einer Optimierung des Mahl- und Sichtprozesses bei einer verbesserten Energieeffizienz und Einhaltung der angestrebten Produktqualität und des Mühlendurchsatzes führen.

Im Bezug auf das Verfahren wird die Aufgabe durch die Merkmale des Anspruchs 1 und in Bezug auf die Vorrichtung durch die Merkmale des Anspruchs 8 gelöst. Zweckmäßige und vorteilhafte Ausgestaltungen sind in den abhängigen Ansprüchen und in der Figurenbeschreibung enthalten.

Eine Grundidee der Erfindung kann darin gesehen werden, einen direkten Kontakt des feuchten Materials mit trockenem Material im Mühlenraum, insbesondere im Mahlraum, zu vermeiden.

Erfindungsgemäß wird das feuchte, zu zerkleinernde Material unmittelbar nach der Mühlenaufgabe und vor dem eigentlichen Mahlvorgang einer schonenden Vortrocknung unterzogen. Indem das Mahlgut in der Mühle getrocknet wird, bevor es dem eigentlichen Mahlvorgang zugeführt wird, wird ein direkter Kontakt von feuchtem und trockenem Mahlgut vermieden.

Das feuchte Material kann Feuchten bis maximal 17% bezog auf Trockenmasse und einen Korndurchmesser bis etwa 50 mm aufweisen.

Das feuchte Material wird vorteilhaft mit Hilfe einer Aufgabeeinrichtung zugeführt, welche mit einem Luftabschluss ausgerüstet ist.

Gemäß der Erfindung erfolgt die Vortrocknung des feuchten Materials in einer Vortrocknungseinrichtung, welche in die vertikale Wälzmühle integriert und derart ausgebildet ist, dass ein direkter Kontakt von feuchtem und trockenem Material und durch die Feuchtigkeit verursachte Interaktionen zwischen den Bestandteilen der im Mahlbett und weiteren vorangegangenen gemeinsamen Schüttungen aus trockenem und feuchtem Material verhindert werden.

Gemäß der Erfindung gelangt ein Teil des in der integrierten Vortrocknungseinrichtung vorgetrockneten Materials in den Rejectkreislauf und der andere Teil mit Hilfe des Heißgasstromes, welcher über eine ringförmig um die Mahlschüssel angeordnete Gasaustrittsöffnung dem Mahlraum zugeführt wird, in den Sichter. Der erstmaligen Vermahlung im Mahlraum unterliegt das in den Mahlraum zurückgeführte, vorgetrocknete Material aus dem Rejectkreislauf und das im Sichter abgewiesene Grobgut des vorgetrockneten Materials, welches zweckmäßigerweise zentral der Mahlschüssel aufgegeben wird.

Es ist von Vorteil, dass das in der integrierten Vortrocknungseinrichtung vorgetrocknete Material sowohl während des Rejectkreislaufs als auch im Sichtprozess eine weitere Trocknung erfährt.

Ein weiterer Vorteil besteht darin, dass bereits im Sichter beziehungsweise Separator aus dem mit dem aufsteigenden Mahlgut-Gas-Strom zugeführten, vorgetrockneten Aufgabegut das Feingut bei entsprechender Feinheit abgetrennt und mit dem Feingut-Gas-Strom abgeführt wird, so dass das im Sichter abgewiesene Grobgut des vorgetrockneten Materials feingutarm zusammen mit dem Grobgut beziehungsweise Griesen des zerkleinerten Mahlguts in den Mahlraum zurückgeführt wird, wo das Grobgut des vorgetrockneten Materials erstmalig vermahlen wird.

Gemäß der erfindungsgemäßen Vorrichtung steht die in die Wälzmühle integrierte Vortrocknungseinrichtung mit der ringförmig um die Mahlschüssel angeordneten Gasaustrittsöffnung derart in Verbindung, dass das vorgetrocknete Material nach dem Austritt aus der integrierten Vortrocknungseinrichtung entweder von dem aufsteigenden Heißgasstrom mitgerissen und dem Sichter zugeführt wird oder den Heißgasstrom, beispielsweise wegen der örtlich zu großen Massen, passiert und nach unten durch den um die Mahlschüssel angeordneten Heißgaseintritt in den Rejectkreislauf der Mühle gelangt.

Die integrierte Vortrocknungseinrichtung reicht von einer Aufgabeeinrichtung für das feuchte, zu zerkleinernde Material am oberen Mühlenbereich beziehungsweise oberhalb des Sichters nach unten bis zu wenigstens einer Austrittsöffnung, welche oberhalb und relativ nahe der ringförmigen Heißgasaustrittsöffnung angeordnet ist, und wird über nahezu ihre gesamte Höhe beziehungsweise Länge mit Heißgas, insbesondere im Gleichstrom beschickt. Die angestrebte Vortrocknung erfolgt in dieser Vorrichtung, so dass eine Zuführung des vorgetrockneten Materials in den Sichter beziehungsweise in den Rejectkreislauf mit nachfolgender Vermahlung von feingutarmen, vorgetrocknetem Material gewährleistet ist.

Dabei ist es vorteilhaft, dass das in den Rejectkreislauf gelangte, vorgetrocknete Material wenigstens einem Trennprozess unterzogen werden kann. Indem ausreichend feines, vorgetrocknetes Material abgetrennt wird, gelang nur noch das gröbere, vorgetrocknete Material in den Mahlraum zur erstmaligen Vermahlung zurück.

In einer relativ einfachen konstruktiven Ausbildung weist die integrierte Vortrocknungseinrichtung wenigstens einen Rohrtrockner auf. Der Rohrtrockner kann von einem bestehenden Luftabschluss der Luftstrom-Wälzmühle, bevorzugt einer Aufgabeeinrichtung für das feuchte Material wie zum Beispiel einer Zellenradschleuse, in einem oberen Mühlenbereich möglichst senkrecht beziehungsweise in einem steilen Winkel innerhalb der Wälzmühle geführt werden und mit einer Austrittsöffnung oberhalb der ringförmigen Heißgasaustrittsöffnung am Umfang des Mahltellers enden.

Bei einem in die Wälzmühle integrierten oder aufgesetzten Sichter kann der wenigstens eine Rohrtrockner, welcher vorteilhaft ein Gleichstrom-Rohrtrockner mit gleicher Material- und Heißgasströmungsrichtung ist, am Sichter befestigt sein. Alternativ oder auch zusätzlich ist eine Befestigung am Mühlen- beziehungsweise Sichtergehäuse möglich.

Der Durchmesser eines Rohrtrockners kann bis etwa 300 mm und der Durchsatz eines Rohrtrockners beziehungsweise eines Rohrtrocknerstranges bis etwa 40 t/h betragen.

Anzahl, Dimensionierung und Anordnung der Rohrtrockner innerhalb einer Wälzmühle können in Abhängigkeit von der Mühlengröße und der Aufgabenmenge und Beschaffenheit des zu zerkleinernden, feuchten Materials variabel gestaltet werden.

Die Vortrocknung des feuchten Aufgabeguts erfolgt in den Gleichstrom-Vortrocknern vorteilhaft durch zwei Wärmeübergänge: Einerseits über das Trocknergehäuse, welches sich in dem vom Heißgas durchströmten Mühlenkorpus befindet, und andererseits durch den im Rohrtrockner geführten Heißgasstrom, der im Gleichstrom mit dem feuchten Mahlgut dem Rohrtrockner aufgegeben werden kann.

Es ist besonders vorteilhaft, wenn der jedem Rohrtrockner zugeführte Heißgasstrom ein vom Heißgasstrom der Wälzmühle abgezweigter Teilgasstrom ist. Der Teilgasstrom beziehungsweise die Teilgasströme werden zweckmäßigerweise aus einer beispielsweise ringförmigen Heißgaszuführung unmittelbar nach der Aufgabe des feuchten Materials in die Rohrtrockner geleitet.

Der Teilgasstrom soll maximal 1,5% des Nenngasvolumens der Mühle je Rohrtrockner beziehungsweise Rohrtrocknerstrang betragen, wobei unter dem Nenngasvolumen der Mühle die Gasmenge am Sichteraustritt, die für den optimalen Betrieb der Mühle notwendig ist, verstanden werden soll. Diese Gasmenge definiert sich über das zur Vermahlung kommende Aufgabegut, der zu erbringenden Mühlendurchsatzleistung und damit über die Mühlengröße. Sie wird bei der Mühlenauslegung bestimmt.

Der Austritt des vorgetrockneten Materials aus dem Rohrtrockner beziehungsweise den Rohrtrocknem kann oberhalb der ringförmig um die Mahlschüssel angeordneten Gasaustrittsöffnung in Bereichen erfolgen, an welchen relativ wenig Mahlgut von der Mahlschüssel abgeworfen wird und ein erhöhter Verschleiß in der Mühle vermieden werden kann, beispielsweise jeweils vor einer Mahlwalze, in Drehrichtung der Mahlschüssel gesehen.

Unter dem Aspekt, Aufgabepunkte hoher Massedichte zu vermeiden, kann es sinnvoll sein, die Gleichstrom-Rohrtrockner am Austritt mit wenigstens einer Dispergiereinrichtung zu versehen. Durch eine Dispergiereinrichtung kann das austretende, vorgetrocknete Aufgabegut aufgefächert werden und nicht in Form vom Strähnen an die Mühlenwand oder auch über die Mahlschüssel in den Mahlkreislauf gelangen.

Als Dispergiereinrichtungen können am Ende eines Rohrtrockners ein Dispergierkonus und vorteilhaft mechanische Laschen oder rotierende Propeller angeordnet werden. Auch kann ein Umfangsbereich der Mahlschüssel beziehungsweise des Mahltellers und insbesondere ein dort angeordneter Staurand oder Stauring als Dispergiereinrichtung ausgebildet und genutzt werden.

Die Dispergiereinrichtung beziehungsweise die Austrittsöffnung der Rohrtrockner kann bis etwa 0,5 m oberhalb des Mahltellers beziehungsweise der ringförmigen Gasaustrittsöffnung angeordnet sein.

Die Vorteile des erfindungsgemäßen Verfahrens und der erfindungsgemäßen Vorrichtung können darin gesehen werden, dass das in der integrierten Vortrocknungseinrichtung, insbesondere in wenigstens einem Gleichstrom-Vortrockner vorgetrocknete Aufgabegut bereits am Sichter beziehungsweise Separator von feinem trockenen Feingut getrennt wird und daher ein feinkornarmes, vorgetrocknetes Grobgut der Vermahlung unterworfen wird. Dies wirkt sich für den nachfolgenden Mahlprozess vorteilhaft aus. Durch die Vortrocknung werden zudem die für den Mahlprozess wesentlichen Eigenschaften der Wälzmühle optimiert. Laufruhe und Vibrationen der Mahlwalzen sowie der gesamten Wälzmühle, der Mühlendurchsatz und der Differenzdruck über die Wälzmühle sowie eine Verringerung des Heißgasstromes und des Arbeitsdrucks sowie des Verschleißes werden erreicht. Wesentlich ist die Unterbindung der durch Feuchtigkeit verursachten Interaktionen beim Mahlprozess zwischen den Bestandteilen im Mahlbett und auch bei vorangegangenen gemeinsamen Schüttungen aus trockenem und feuchtem Mahlgut.

Die Erfindung wird nachstehend anhand einer Zeichnung erläutert; in dieser zeigen in einer stark schematisierten Weise
- Fig. 1:: ein Anlagenschema mit einer erfindungsgemäßen Vorrichtung;
- Fig. 2:: eine in eine vertikale Wälzmühle integrierte Vortrocknungseinrichtung;
- Fig. 3:: eine Draufsicht auf die vertikale Wälzmühle mit integrierter Vortrocknungseinrichtung nach Linie III-III in Fig. 2;
- Fig. 4:: eine Dispergiereinrichtung der integrierten Vortrocknungseinrichtung und
- Fig. 5:: eine alternativ ausgebildete Dispergiereinrichtung.

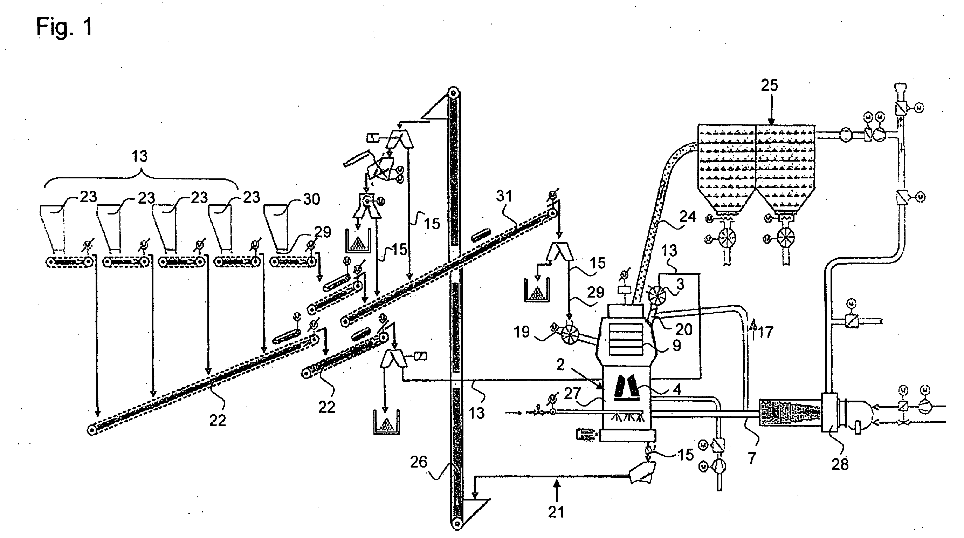

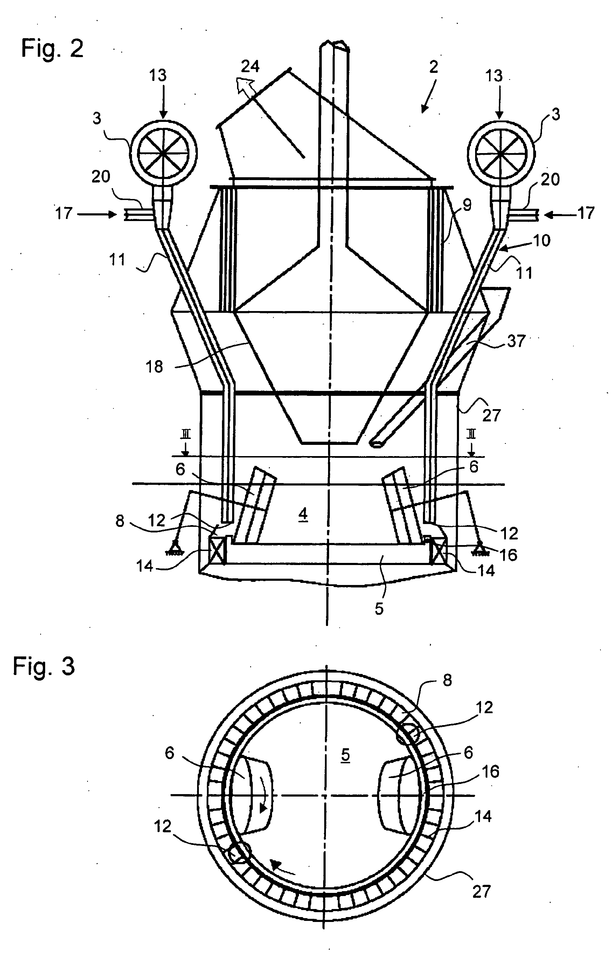

Fig. 1 zeigt eine Mahlanlage mit einer vertikalen Wälzmühle des LOESCHE-Typs für die Zement- und Hüttensandvermahlung. Bei der vertikalen Wälzmühle 2 handelt es sich um eine Luftstrom-Wälzmühle mit integriertem Sichter 9, welche in Fig. 1 stark schematisiert dargestellt ist. Es wird auf die Figuren 2 und 3 verwiesen.

Aus Materialaufgabebunkern 23 wird als Mühlenaufgabegut feuchtes Material 13, beispielsweise künstliche und natürliche Puzzolane, Kesselsand, Silicastaub, Kalkstein und Calciumsulfatverbindungen wie natürliche und industrielle Gipse, über ein oder mehrere Transportbänder 22 zur Wälzmühle 2 und in wenigstens eine Aufgabeeinrichtung 3 mit Luftabschluss für das feuchte Material 13 transportiert.

In Fig. 1 ist als Aufgabeeinrichtung 3 eine Zellenradschleuse am oberen Bereich der Wälzmühle 2 und über dem Sichter 9 angeordnet, während die vertikale Wälzmühle 2 gemäß Fig. 2 mit zwei Aufgabeeinrichtungen 3 versehen ist, welche jeweils einem Rohrtrockner 11 der integrierten Vortrocknungseinrichtung 10 zugeordnet ist.

Unmittelbar unterhalb jeder Aufgabeeinrichtung 3 und innerhalb der Wälzmühle 2 mit integriertem Sichter 9 ist zur Vortrocknung des aufgegebenen feuchten Materials 13 eine Vortrocknungseinrichtung 10 angeordnet (siehe Fig. 2). Als Vortrocknungseinrichtung können vorteilhaft Rohrtrockner 11 eingesetzt werden, welche beispielhaft aus den Figuren 2 und 3 hervorgehen. In diese in die Wälzmühle 2 integrierte Vortrocknungseinrichtung 10 gelangt das feuchte Material 13 unmittelbar aus der wenigstens einen Aufgabeeinrichtung 3 und wird mit Hilfe von Heißgas, welches über eine Heißgaszuführung 20 am oberen Ende der integrierten Vortrocknungseinrichtung 10 und somit unmittelbar nach Eintritt des feuchten Materials 13 in die integrierte Vortrocknungseinrichtung 10 zugeführt wird, getrocknet.

Die Wälzmühle 2 mit integriertem Sichter 9 und integrierter Vortrocknungseinrichtung 10 weist einen Mahlraum 4 mit einer rotierenden Mahlschüssel 5, auf einem Mahlbett abrollende, stationäre Mahlwalzen 6 und gegebenenfalls Präparationswalzen auf (siehe Fig. 2).

Die Mahlschüssel 5 ist am Umfang mit einem Staurand 16 versehen und von einer ringförmigen Gasaustrittsöffnung 8 umgeben, aus welcher Heißgas für den Mahltrocknungsprozess im Mahlraum 4 und für einen zum Sichter 9 aufsteigenden Mahlgut-Gas-Strom und einen nachfolgenden Feingut-Gas-Strom 24 zu einer Trenneinrichtung 25, beispielsweise einem Filter (Fig. 1), ausgeblasen wird. Die ringförmige Gasaustrittsöffnung 8 zwischen der Mahlschüssel 5 und dem Mühlengehäuse 27 ist mit einer Leiteinrichtung 14 für eine Drallströmung, zum Beispiel einem Schaufel-oder Düsenkranz, versehen.

Die Wälzmühle 2 ist neben der Aufgabeeinrichtung 3 für das feuchte Material 13 mit einer Einrichtung 19 zur Aufgabe eines trockenen Materials 29, zum Beispiel Klinker, ausgestattet (siehe Fig. 1). Die Einrichtung 19 ist mit einer entsprechend angeordneten Aufgabenschurre 37 (siehe Fig. 2) für eine zentrale Materialaufgabe auf die Mahlschüssel 5 und nachfolgende Vermahlung verbunden.

Die Zuführung des trockenen Materials 29 aus einem Aufgabebunker 30 erfolgt mit Hilfe wenigstens einer Transporteinrichtung 31, welche auch das von der Mahlschüssel 5 und über den Staurand 16 geschleuderte, nach unten fallende und in einen Rejectkreislauf 21 gelangende, grobere Material zugeführt wird (Fig. 1). Dieses Material gelangt somit mit dem trockenen Material 29 über die Einrichtung zur zentralen Aufgabe 19 zurück in den Mahlraum 4 und wird hier zerkleinert. In der Regel ist eine weitere Transporteinrichtung 26, beispielsweise ein Becherwerk, zwischen der Wälzmühle 2 und der Transporteinrichtung 31 für das vorgetrocknete Material 15 aus der Wälzmühle 2 angeordnet.

Die in die Wälzmühle 2 integrierte Vortrocknungseinrichtung 10 ist mit dem Rejectkreislauf 21 und mit dem Sichter 9 verbunden, so dass ein Teil des in der Vortrocknungseinrichtung 10 vorgetrockneten Materials 15, welcher über die ringförmige Heißgasaustrittsöffnung 8 dem Rejectkreislauf 21 zugeführt wird, erstmalig mit dem trockenen Material 29 und dem abgeschleuderten Mahlgut über die Einrichtung 19 zur zentralen Aufgabe in den Mahlraum 4 gelangt und ohne nachteilige Wirkungen gemeinsam vermahlen werden kann.

Die integrierte Vortrocknungseinrichtung 10 der Fig. 2 weist zwei Gleichstrom-Rohrtrockner 11 auf, welche nahezu senkrecht oder zumindest mit einem relativ steilen Winkel und einander gegenüberliegend innerhalb der Wälzmühle 2 angeordnet sind (Figuren 2 und 3). Die Rohrtrockner können am integrierten Sichter 9 und/ oder am Mühlengehäuse 27 beziehungsweise am Sichtergehäuse befestigt sein.

Fig. 2 veranschaulicht, dass die Gleichstrom-Rohrtrockner 11 vom oberen Mühlenbereich bis etwa in Höhe der Mahlschüssel 5 und des Staurandes 16 reichen und jeweils mit einer Austrittsöffnung 12 oberhalb der ringförmigen Gasaustrittsöffnung 8 für das Mühlen-Heißgas angeordnet sind. Gleichzeitig sind sie jeweils vor einer Mahlwalze 6 mit ihrer Austrittsöffnung 12 angeordnet und damit in einem Bereich, in welchem das von der Mahlbahn abgeworfene Mahlgut mengenmäßig am geringsten anfällt. Dadurch kann ein erhöhter Verschleiß in der Mühle vermieden werden. Der Abstand der Gleichstrom-Rohrtrockner 11 mit ihrer Austrittsöffnung 12 von der Heißgasaustrittsöffnung 8 kann bis zu 50 cm betragen.

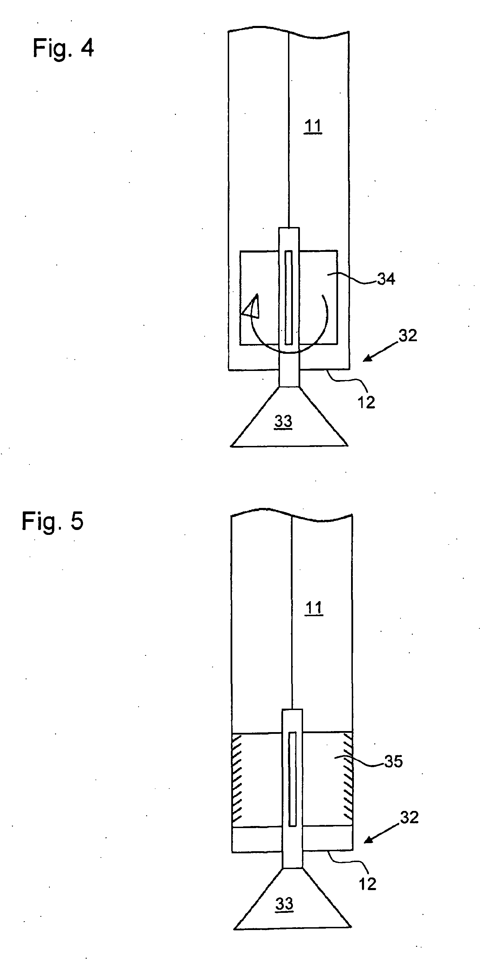

Um Aufgabepunkte hoher Massedichte zu vermeiden, können Dispergiereinrichtungen 32 im Bereich der Austrittsöffnung 12 der Gleichstrom-Rohrtrockner 11 angebracht werden (siehe Figuren 4 und 5). Diese Dispergiereinrichtungen 32 gewährleisten, dass das austretende, vorgetrocknete Mahlgut 15 aufgefächert wird und nicht als Strähne an die Mühlenwand oder über die Mahlschüssel 5 in den Mahlkreislauf gelangt.

Der Teil des in den Gleichstrom-Rohrtrocknern 11 vorgetrockneten Materials 15, welcher insbesondere wegen zu großer Massen nach unten durch die ringförmige Gasaustrittsöffnung 8 für das Mühlen-Heißgas fällt, gelangt in den Rejectkreislauf 21 und wird in diesem Kreislauf weiter getrocknet (Fig. 1).

Der andere Teil des aus dem Gleichstrom-Rohrtrockner 11 austretenden, vorgetrockneten Materials wird vom Heißgasstrom 7 der Wälzmühle 2 erfasst und gelangt im aufsteigenden Mahlgut-Gas-Strom zum Sichter 9. Im Sichter 9, beispielsweise einem LSKS-Sichter, wird Feingut vom Grobgut getrennt, und vorteilhaft erfolgt auch eine Trennung des Feinguts aus dem in der integrierten Vortrocknungseinrichtung 10 vorgetrockneten Materials. Es können dabei bis zu 100% des ehemals feucht aufgegebenem Material bei entsprechender Feinheit als Produkt abgeschieden werden und mit dem Feingut-Gas-Strom 24 der Trenneinrichtung 25 (Fig. 1) zugeführt werden.

Das Grobgut des feuchten und nunmehr vorgetrockneten Materials wird vom Sichter 9 zurückgewiesen und dieses Grobgut wird über einen Grießekonus 18 (Fig. 2) der Mahlschüssel 5 erstmalig aufgegeben und der Vermahlung zugeführt. Die Abtrennung des vorgetrockneten Feingutes im Sichter 9 und die damit einhergehende feinkomarme Zuführung des Grobgutes wirkt sich besonders vorteilhaft auf den Mahlprozess aus.

Fig. 3 zeigt, dass eine Dispergierung beziehungsweise Auffächerung des aus einem Gleichstrom-Rohrtrockner 11 austretenden, vorgetrockneten Materials 15 nicht nur durch zusätzliche Dispergiereinrichtungen 32 (Figuren 4 und 5) im Bereich der Austrittsöffnung 12, sondern auch mit Hilfe des Staurings 16 erfolgen kann. Der Stauring 16 kann eine entsprechende Ausbildung aufweisen, so dass eine Auffächerung des austretenden, vorgetrockneten Materials 15 erfolgen kann.

Dispergiereinrichtungen 32 im Bereich der Austrittsöffnung 12 eines Rohrtrockners 11 sind beispielhaft in den Figuren 4 und 5 dargestellt. Ein Dispergierkonus 33 ist jeweils außerhalb der Austrittsöffnung 12 angeordnet, und rotierende Propeller 34 (Fig. 4) beziehungsweise Laschen 35 (Fig. 5), welche sich stern- oder strahlenförmig nahezu über den Querschnitt des Rohrtrockners 11 erstrecken, sind innerhalb des Rohrtrockners 11 und nahe an der Austrittsöffnung 12 positioniert und gewährleisten eine vorteilhafte Auffächerung des vorgetrockneten Materials 15 aus dem Rohrtrockner 11.

Fig. 1 zeigt, dass die integrierte Vortrocknungseinrichtung 10 mit einem Heißgas-Teilstrom 17 betrieben werden kann, welcher von einer Heißgasleitung 7 für die vertikale Wälzmühle 2 abgezweigt wird. Die Abzweigung kann im Bereich zwischen einem Heißgaserzeuger 28 und der vertikalen Wälzmühle 2 erfolgen und die Heißgaszuführung 20 für den Heißgas-Teilstrom 17 kann unmittelbar unterhalb der Aufgabeeinrichtung 3 in die integrierte Vortrocknungseinrichtung 10 münden (siehe auch Fig. 2).

## Patentansprüche

1. Verfahren zur Vermahlung von feuchtem Material, insbesondere für die Herstellung von Zement, in einer vertikalen Wälzmühle,
bei welchem feuchtes Material (13) über eine Aufgabeeinrichtung (3) einem Mahlraum (4) mit einer rotierenden Mahlschüssel (5) und darauf abrollenden, stationären Mahlwalzen (6) aufgegeben, zerkleinert und gleichzeitig mit Hilfe eines Heißgasstroms (7), welcher über eine ringförmig um die Mahlschüssel (5) angeordnete Gasaustrittsöffnung (8) in den Mahlraum (4) gelangt, getrocknet wird, und bei welchem von der Mahlschüssel (5) in die ringförmige Gasaustrittsöffnung (8) abgeworfenes Mahlgut über einen Rejectkreislauf (21) sowie in einem Sichter (9) aus einem Mahlgut-Gas-Strom abgewiesenes Grobgut in den Mahlraum (4) zurückgeführt wird, während ein Feingut-Gas-Strom (24) einer Trenneinrichtung (25) zugeführt wird,
**dadurch gekennzeichnet,**
**dass** das feuchte Material (13) nach der Aufgabe in die Wälzmühle (2) zunächst einer in die Wälzmühle (2) integrierten Vortrocknungseinrichtung (10) zugeführt und in dieser vorgetrocknet wird, und
**dass** das vorgetrocknete Material (15) anteilig über den Rejectkreislauf (21) sowie über den Sichter (9) nach Abtrennung von Feingut dem Mahlraum (4) zur erstmaligen Vermahlung zugeführt wird.

2. Verfahren nach Anspruch 1,
**dadurch gekennzeichnet,**
**dass** das in der integrierten Vortrocknungseinrichtung (10) vorgetrocknete Material (15) oberhalb der Mahlschüssel (5) und ringförmigen Gasaustrittsöffnung (8) aus der integrierten Vortrocknungseinrichtung (10) ausgetragen wird und teils mit dem Heißgasstrom (7) in den Sichter (9) und teils in den Rejectkreislauf (21) gelangt und
**dass** danach das vorgetrocknete Material (15) aus dem Rejectkreislauf (21) und das Grobgut aus dem Sichter (9) feingutarm der Mahlschüssel (5) zentral aufgegeben und vermahlen wird.

3. Verfahren nach Anspruch 1 oder 2,
**dadurch gekennzeichnet,**
**dass** feuchtes Material (13) mit Feuchten bis maximal 17% bezogen auf Trockenmasse und mit einem Korndurchmesser bis etwa maximal 50 mm aufgegeben wird und das feuchte Material (13) in der integrierten Vortrocknungseinrichtung (10) mit Hilfe von Heißgas (17) vorgetrocknet wird.

4. Verfahren nach einem der Ansprüche 2 oder 3,
**dadurch gekennzeichnet,**
**dass** das in der integrierten Vortrocknungseinrichtung (10) vorgetrocknete Material (15) dispergiert und oberhalb der Mahlschüssel (5) und ringförmigen Gasaustrittsöffnung (8) aufgefächert aus der integrierten Vortrocknungseinrichtung (10) ausgetragen wird.

5. Verfahren nach einem der vorhergehenden Ansprüche,
**dadurch gekennzeichnet,**
**dass** die Vortrocknungseinrichtung (10) derart ausgebildet ist, dass das feuchte Material (13) im Heißgasstrom (17) nahezu senkrecht nach unten geführt und aus einer Austrittsöffnung (12) oberhalb der Mahlschüssel (5) und/oder ringförmigen Gasaustrittsöffnung (8) ausgetragen wird.

6. Verfahren nach einem der vorhergehenden Ansprüche,
**dadurch gekennzeichnet,**
**dass** als integrierte Vortrocknungseinrichtung (10) wenigstens ein Rohrtrockner (11) eingesetzt wird und dass die Anzahl, Dimensionierung und Anordnung der Rocktrockner (11) in der Wälzmtihle (2) in Abhängigkeit von der Größe der Wälzmühle und/oder der Menge und Beschaffenheit des feuchten Materials (13) vorgegeben wird.

7. Verfahren nach einem der vorhergehenden Ansprüche,
**dadurch gekennzeichnet,**
**dass** aus dem dem Sichter (9) zugeführten, vorgetrockneten Material (15) bis zu 100% Feingut abgetrennt und im Feingut-Gas-Gemisch (24) ausgetragen wird und dass das im Sichter (9) abgewiesene Grobgut der Mahlschüssel (5) zentral aufgegeben und vermahlen wird.

8. Vorrichtung zur Vermahlung von feuchtem Material, insbesondere von Zementrohmaterial, mit einer vertikalen Wälzmühle (2), einem Sichter (9) und einem Rejectkreislauf (21),
bei welcher die Wälzmühle (2) einen Mahlraum (4) mit einer rotierenden Mahlschüssel (5) und darauf abrollenden, stationären Mahlwalzen (6) sowie eine ringförmige, die Mahlschüssel (5) umgebende Gasaustrittsöffnung (8) für einen Heißgasstrom (7) zur Mahltrocknung von aufgegebenem, feuchtem Material (13) und zum pneumatischen Transport des zerkleinerten Materials zum Sichter (9) und des im Sichter (9) abgetrennten Feinguts in einem Feingut-Gas-Strom (24) aufweist, und
der Rejectkreislauf (21) eine Transporteinrichtung (26) für von der Mahlschüssel (5) geschleudertes und durch die Gasaustrittsöffnung (8) nach unten fallendes Material und eine Einrichtung (19) zur zentralen Aufgabe dieses Materials auf die Mahlschüssel (5) aufweist, insbesondere zur Durchführung des Verfahrens nach einem der Ansprüche 1 bis 7,
**dadurch gekennzeichnet,**
**dass** zur Vortrocknung des aufgegebenen, feuchten Materials (13) eine Vortrocknungseinrichtung (10) in die Wälzmühle (2) integriert ist, welche mit der ringförmigen Gasaustrittsöffnung (8) und mit dem Sichter (9) sowie mit dem Rejectkreislauf (21) in funktionaler Verbindung steht, um das vorgetrocknete Material (15) der Mahlschüssel (5) und den Mahlwalzen (6) zur erstmaligen Vermahlung zuzuführen.

9. Vorrichtung nach Anspruch 8,
**dadurch gekennzeichnet,**
**dass** die integrierte Vortrocknungseinrichtung (10) von wenigstens einer Aufgabeeinrichtung (3) für das feuchte, zu zerkleinernde Material (13) in einem oberen Bereich der Wälzmühle (2) und oberhalb des Sichters (9) bis zu einer Austrittsöffnung (12) nahe der ringförmigen Gasaustrittsöffnung (8) am Umfang der Mahlschüssel (5) reicht und steil bis senkrecht angeordnet ist.

10. Vorrichtung nach Anspruch 8,
**dadurch gekennzeichnet,**
**dass** als integrierte Vortrocknungseinrichtung (10) wenigstens ein Rohrtrockner (11) angeordnet und am Mühlengehäuse (27) oder bei einer in die Wälzmühle (2) integrierten Anordnung des Sichters (9) am Sichter (9) und/oder am Sichtergehäuse befestigt ist.

11. Vorrichtung nach Anspruch 10,
**dadurch gekennzeichnet,**
**dass** die integrierte Vortrocknungseinrichtung (10) eine Heißgaszuführung (20) aufweist, welche nahe der Aufgabeeinrichtung (3) für das feuchte Material (13) angeordnet ist.

12. Vorrichtung nach einem der Ansprüche 9 bis 11,
**dadurch gekennzeichnet,**
**dass** die integrierte Vortrocknungseinrichtung (10) wenigstens einen Gleichstrom-Rohrtrockner (11) aufweist, welcher mit der Austrittsöffnung (12) in einem vorgegebenen Abstand oberhalb der Mahlschüssel (5) und ringförmigen Gasaustrittsöffnung (8) und, in Drehrichtung der Mahlschüssel gesehen, vor den Mahlwalzen (6) angeordnet ist.

13. Vorrichtung nach Anspruch 12,
**dadurch gekennzeichnet,**
**dass** die integrierte Vortrocknungseinrichtung (10) im Bereich der Austrittsöffnung (12) jeweils mit einer Dispergiereinrichtung (32) versehen ist und/oder ein Randbereich oder Staurand (16) der Mahlschüssel (5) zum Dispergieren des vorgetrockneten Materials (15) ausgebildet ist.

14. Vorrichtung nach Anspruch 13,
**dadurch gekennzeichnet,**
**dass** als Dispergiereinrichtung (32) jeweils ein Dispergierkonus (33) und mechanische Laschen (35) oder rotierende Propeller (34) im Bereich der Austrittsöffnungen (12) angeordnet sind.

15. Vorrichtung nach einem der Ansprüche 8 bis 14,
**dadurch gekennzeichnet,**
**dass** die ringförmige Gasaustrittsöffnung (8) als Düsen- oder Schaufelkranz (14) ausgebildet ist.

## Claims

1. Method for grinding moist material, in particular for the production of cement, in a vertical roller mill,
wherein moist material (13) is fed via a feed unit (3) to a grinding chamber (4) with a rotating grinding pan (5) and stationary grinding rollers (6) rolling thereon, comminuted and simultaneously dried with the aid of a hot gas flow (7) which passes via a gas outlet opening (8) arranged annularly around the grinding pan (5) into the grinding chamber (4), and wherein grinding material thrown off by the grinding pan (5) into the annular gas outlet opening (8) is fed back into the grinding chamber (4) via a reject circuit (21) as well as coarse material rejected in a classifier (9) from the grinding material-gas flow, while a fines-gas flow (24) is fed to a separating unit (25),
**characterised in that**
the moist material (13), after being fed into the roller mill (2), is initially fed to a pre-drying unit (10) integrated into the roller mill (2) and pre-dried in said pre-drying unit (10), and
the pre-dried material (15) is proportionately fed via the reject circuit (21) and via the classifier (9), after separation of fines, to the grinding chamber (4) for the first grinding operation.

2. Method according to claim 1,
**characterised in that**
the material (15) pre-dried in the integrated pre-drying unit (10) is discharged, above the grinding pan (5) and annular gas outlet opening (8), from the integrated pre-drying unit (10) and passes partially with the hot gas flow (7) into the classifier (9) and partially into the reject circuit (21), and
the pre-dried material (15) from the reject circuit (21) and the coarse material from the classifier (9), depleted of fines, are fed centrally to the grinding pan (5) and ground.

3. Method according to claim 1 or 2,
**characterised in that**
moist material (13) with moistures up to maximum 17% in relation to the dry mass and having a grain diameter of up to approximately maximum 50 mm is supplied and the moist material (13) is pre-dried in the integrated pre-drying unit (10) with the aid of hot gas (17).

4. Method according to one of the claims 2 to 3,
**characterised in that**
the material (15) pre-dried in the integrated pre-drying unit (10) is dispersed and fanned out above the grinding pan (5) and annular gas outlet opening (8) and discharged from the integrated pre-drying unit (10).

5. Method according to one of the preceding claims,
**characterised in that**
the pre-drying unit (10) is designed in such a way that the moist material (13) in the hot gas flow (17) is fed virtually perpendicularly downwards and discharged from an outlet opening (12) above the grinding pan (5) and / or annular gas outlet opening (8).

6. Method according to one of the preceding claims,
**characterised in that**
at least one pipe dryer (11) is used as an integrated pre-drying unit (10) and the number, dimensions and arrangement of the pipe dryers (11) in the roller mill (2) are predefined in dependence upon the size of the roller mill and / or the quantity and composition of the moist material (13).

7. Method according to one of the preceding claims,
**characterised in that**
up to 100% fines is separated from the pre-dried material (15) fed to the classifier (9) and discharged in the fines-gas mixture (24) and the coarse material rejected in the classifier (9) is centrally fed to the grinding pan (5) and ground.

8. Apparatus for grinding moist material, in particular cement raw material, with a vertical roller mill (2), a classifier (9) and a reject circuit (21),
wherein the roller mill (2) comprises a grinding chamber (4) with a rotating grinding pan (5) and stationary grinding rollers (6) rolling thereon as well as an annular gas outlet opening (8), surrounding the grinding pan (5), for a hot gas flow (7) for grinding-drying of supplied moist material (13) and for pneumatic transport of the comminuted material to the classifier (9) and the fines separated in the classifier (9) in a fines-gas flow (24), and
the reject circuit (21) comprises a transport means (26) for material flung off by the grinding pan (5) and descending through the gas outlet opening (8) and also comprises a means (19) for central feed of this material to the grinding pan (5), in particular for execution of the method according to one of the claims 1 to 7,
**characterised in that**
a pre-drying unit (10) is integrated into the roller mill (2) for pre-drying the moist material (13) supplied, said pre-drying unit (10) being in functional connection with the annular gas outlet opening (8) and with the classifier (9) and with the reject circuit (21) in order to feed the pre-dried material (15) to the grinding pan (5) and the grinding rollers (6) for the first grinding operation.

9. Apparatus according to claim 8,
**characterised in that**
the integrated pre-drying unit (10) extends from at least one feed unit (3) for the moist material (13) to be comminuted in an upper region of the roller mill (2) and above the classifier (9) as far as an outlet opening (12) close to the annular gas outlet opening (8) on the periphery of the grinding pan (5) and is arranged steeply to perpendicularly.

10. Apparatus according to claim 8,
**characterised in that**
at least one pipe dryer (11) is arranged as an integrated pre-drying unit (10) and fixed to the mill housing (27) or, in case of an integrated arrangement of the classifier (9) in the roller mill (2), fixed to the classifier (9) and / or to the classifier housing.

11. Apparatus according to claim 10,
**characterised in that**
the integrated pre-drying unit (10) comprises a hot gas feed (20) which is arranged close to the feed unit (3) for the moist material (13).

12. Apparatus according to one of the claims 9 to 11,
**characterised in that**
the integrated pre-drying unit (10) comprises at least one unidirectional flow tube dryer (11) which is arranged with the outlet opening (12) at a predefined distance above the grinding pan (5) and annular gas outlet opening (8) and is arranged upstream of the grinding rollers (6) as seen in the rotation direction of the grinding pan.

13. Apparatus according to claim 12,
**characterised in that**
the integrated pre-drying unit (10) is provided in the region of the outlet opening (12) respectively with a dispersing unit (32) and / or an edge region or retention rim (16) of the grinding pan (5) is designed to disperse the pre-dried material (15).

14. Apparatus according to claim 13,
**characterised in that**
a dispersing unit (32) is provided in the form of a dispersing cone (33) and mechanical plate elements (35) or rotating propellers (34) in the region of the outlet openings (12).

15. Apparatus according to one of the claims 8 to 14,
**characterised in that**
the annular gas outlet opening (8) is formed as a circular set of nozzles or vanes (14).

## Revendications

1. Procédé de broyage de matières humides, plus particulièrement pour la fabrication de ciment, dans un broyeur vertical à rouleaux,
selon lequel de la matière humide (13), délivrée par l'intermédiaire d'un dispositif d'alimentation (3) à un espace de broyage (4) comportant un plateau de broyage rotatif (5) et des rouleaux de broyage (6) stationnaires tournant au-dessus de celui-ci, est broyée et, en même temps, séchée à l'aide d'un flux de gaz chaud (7) qui arrive dans l'espace de broyage (4) par l'intermédiaire d'une ouverture de sortie de gaz (8) annulaire disposée autour du plateau de broyage (5), et selon lequel la matière de broyage provenant du plateau de broyage (5) et déversée dans l'ouverture de sortie de gaz (8) annulaire est renvoyée par l'intermédiaire d'un circuit de rejet (21) et la matière grossière rejetée en provenance d'un flux de gaz et de matière de broyage dans un dispositif de tri (9) est renvoyée dans l'espace de broyage (4), tandis qu'un flux de gaz et de matière fine (24) est acheminé jusqu'à un dispositif de séparation (25),
**caractérisé :**
**en ce qu'**après la fourniture au broyeur à rouleaux (2), la matière humide (13) est tout d'abord acheminée jusqu'à un dispositif de pré-séchage (10) intégré dans le broyeur à rouleaux (2), puis est pré-séchée dans celui-ci, et
**en ce que** la matière pré-séchée (15) est, après la séparation des matières fines, acheminée pour le premier broyage jusqu'à l'espace de broyage (4), en partie par l'intermédiaire du circuit de rejet (21) ainsi que du dispositif de tri (9).

2. Procédé selon la revendication 1,
**caractérisé :**
**en ce que** la matière (15) pré-séchée dans le dispositif de pré-séchage intégré (10) est évacuée du dispositif de pré-séchage intégré (10) au-dessus du plateau de broyage (5) et de l'ouverture de sortie de gaz (8) annulaire, et arrive en partie, avec le flux de gaz chaud (7), dans le dispositif de tri (9) et en partie dans le circuit de rejet (21), et
**en ce qu'**ensuite, la matière pré-séchée (15) provenant du circuit de rejet (21) et la matière grossière pauvre en matières fines provenant du dispositif de tri (9) sont fournies de manière centrale au plateau de broyage (5) et broyées.

3. Procédé selon la revendication 1 ou 2,
**caractérisé :**
**en ce que** de la matière humide (13) est fournie avec une humidité qui, exprimée par rapport à la masse sèche, est, au maximum, de 17 % et avec un diamètre de grain qui est, au maximum, de 50 mm environ, et la matière humide (13) est pré-séchée dans le dispositif de pré-séchage intégré (10) à l'aide d'un gaz très chaud (17).

4. Procédé selon une des revendications 2 ou 3,
**caractérisé :**
**en ce que** la matière (15) pré-séchée dans le dispositif de pré-séchage intégré (10) est dispersée et, après dispersion en dehors du dispositif de pré-séchage intégré (10), est évacuée au-dessus du plateau de broyage (5) et de l'ouverture de sortie de gaz (8) annulaire.

5. Procédé selon une des revendications précédentes,
**caractérisé :**
**en ce que** le dispositif de pré-séchage intégré (10) est réalisé de telle manière que la matière humide (13) est transportée dans le flux de gaz chaud (17) à peu près perpendiculairement vers le bas et est évacuée d'une ouverture de sortie (12) au-dessus du plateau de broyage (5) et/ou de l'ouverture de sortie de gaz (8) annulaire.

6. Procédé selon une des revendications précédentes,
**caractérisé :**
**en ce qu'**au moins un dispositif de séchage à tubes (11) est utilisé en tant que dispositif de pré-séchage intégré (10), le nombre, le dimensionnement et la disposition du dispositif de séchage à tubes (11) dans le broyeur à rouleaux (2) étant prédéterminés en fonction de la taille du broyeur à rouleaux et/ou de la quantité et de la nature de la matière humide (13).

7. Procédé selon une des revendications précédentes,
**caractérisé :**
**en ce que** de la matière fine est séparée jusqu'à 100 % de la matière pré-séchée (15) acheminée en provenance du dispositif de tri (9) et déchargée dans le flux de gaz et de matière fine (24), et en ce que la matière grossière rejetée dans le dispositif de tri (9) est fournie de manière centrale au plateau de broyage (5) et broyée.

8. Dispositif de broyage de matières humides, plus particulièrement de matières premières pour du ciment, avec un broyeur à rouleaux (2) vertical, un dispositif de tri (9) et un circuit de rejet (21),
dans lequel le broyeur à rouleaux (2) comprend un espace de broyage (4) comportant un plateau de broyage rotatif (5) et des rouleaux de broyage (6) stationnaires tournant au-dessus de celui-ci ainsi qu'une ouverture de sortie de gaz (8) annulaire disposée autour du plateau de broyage (5) pour un flux de gaz très chaud (7), pour le broyage et le séchage de la matière humide (13) fournie et pour le transport pneumatique de la matière broyée jusqu'au dispositif de tri (9) et de la matière fine séparée dans le dispositif de tri (9) dans un flux de gaz et de matière fine (24), et
le circuit de rejet (21) comprend un dispositif de transport (26) de la matière projetée en dehors du plateau de broyage (5) et tombant vers le bas par l'ouverture de sortie de gaz (8) et un dispositif (19) pour la fourniture de manière centrale de cette matière au plateau de broyage (5), plus particulièrement pour la mise en oeuvre du procédé selon une des revendications 1 à 7,
**caractérisé :**
**en ce que**, pour le pré-séchage de la matière humide (13) fournie, un dispositif de pré-séchage (10) est intégré dans le broyeur à rouleaux (2) et coopère de manière fonctionnelle avec l'ouverture de sortie de gaz (8) annulaire et avec le dispositif de tri (9) ainsi qu'avec le circuit de rejet (21) pour l'acheminement de la matière pré-séchée (15) vers le plateau de broyage (5) et vers les rouleaux de broyage (6) pour le premier broyage.

9. Dispositif selon la revendication 8,
**caractérisé :**
**en ce que** le dispositif de pré-séchage intégré (10) s'étend d'au moins un dispositif d'alimentation (3) pour la matière humide (13) à broyer dans une zone supérieure du broyeur à rouleaux (2) et au-dessus du dispositif de tri (9) jusqu'à une ouverture de sortie (12) au voisinage de l'ouverture de sortie de gaz (8) annulaire à la périphérie du plateau de broyage (5), et est disposé de manière raide jusqu'à la verticale.

10. Dispositif selon la revendication 8,
**caractérisé :**
**en ce qu'**au moins un dispositif de séchage à tubes (11) est disposé en tant que dispositif de pré-séchage intégré (10), et est fixé sur le boîtier (27) du broyeur ou sur le dispositif de tri (9) dans un élément du dispositif de tri (9) intégré dans le broyeur à rouleaux (2) et/ou sur le boîtier du dispositif de tri.

11. Dispositif selon la revendication 10,
**caractérisé :**
**en ce que** le dispositif de pré-séchage intégré (10) comprend une conduite d'alimentation en gaz très chaud (20), qui est disposée au voisinage du dispositif d'alimentation (3) pour la matière humide (13).

12. Dispositif selon une des revendications 9 à 11,
**caractérisé :**
**en ce que** le dispositif de pré-séchage intégré (10) comprend au moins un dispositif de séchage à tubes (11) à écoulement continu (11), qui est disposé avec l'ouverture de sortie (12) à une distance prédéterminée au-dessus du plateau de broyage (5) et de l'ouverture de sortie de gaz (8) annulaire et, vu dans le sens de rotation du plateau de broyage, avant les rouleaux de broyage (6).

13. Dispositif selon la revendication 12,
**caractérisé :**
**en ce que** le dispositif de pré-séchage intégré (10) est respectivement pourvu, dans la zone de l'ouverture de sortie (12), d'un dispositif de dispersion (32), et/ou une zone de bordure ou un bord de retenue (16) du plateau de broyage (5) est formé pour la dispersion de la matière pré-séchée (15).

14. Dispositif selon la revendication 13,
**caractérisé :**
**en ce que**, en tant que dispositif de dispersion (32), respectivement un cône de dispersion (33) et des volets mécaniques (35) ou un propulseur rotatif (34) sont disposés dans la zone des ouvertures de sortie (12).

15. Dispositif selon une des revendications 8 à 14,
**caractérisé :**
**en ce que** l'ouverture de sortie de gaz (8) annulaire est constituée sous la forme d'une couronne de buses ou d'aubes (14).
